# EUROPEAN PATENT SPECIFICATION

(11) **EP 4 000 248 B1**
(45) Date of publication and mention of the grant of the patent: **06.11.2024**
(21) Application number: 19828801.1
(22) Date of filing: 30.12.2019
(51) Int. Cl.: H04N 23/11, H04N 23/90, H04N 23/698, H04N 7/18

(54) **METHOD AND APPARATUS FOR GENERATING SURVEILLANCE IMAGE DATA**
VERFAHREN UND VORRICHTUNG ZUR ERZEUGUNG VON ÜBERWACHUNGSBILDDATEN
PROCÉDÉ ET APPAREIL POUR GÉNÉRER DES DONNÉES D'IMAGE DE SURVEILLANCE

(43) Date of publication of application: 25.05.2022
(73) Proprietor: Euroatlas GmbH, 28307 Bremen (DE)
(72) Inventor: APPEL, Patrick, 28307 Bremen (DE)
(74) Representative: Boco IP Oy Ab
(86) International application number: PCT/EP2019/087148
(87) International publication number: WO 2021/136582

(56) References cited:
- WO-A1-2010/120707
- US-A1- 2018 253 875
- ANOMYMUS: "The driver sight system fit for MBTs", 31 January 2018 (2018-01-31), XP055724555, Retrieved from the Internet <URL:https://cdn.wartsila.com/docs/default-source/euroatlas-files/vision-systems/b6429-2_120-day-night-vision-system-leaflet-2018.pdf?sfvrsn=4ee41244_6> [retrieved on 20200824]
- ANOMYMUS: "Extreme Low Light Digital Vision", DEFENCE TURKEY, vol. 11, no. 74, 1 April 2017 (2017-04-01), pages 106, XP055724559, Retrieved from the Internet <URL:https://www.defenceturkey.com/files/issues/5910fe0e9ba3e.pdf> [retrieved on 20200824]
- ANOMYMUS: "360° Advanced Situational Awareness Day & Night for Army Applications", 18 June 2019 (2019-06-18), pages 1 - 2, XP055724569, Retrieved from the Internet <URL:https://cdn.wartsila.com/docs/default-source/euroatlas-files/vision-systems/b6429-3_360-advanced-situational-awareness-leaflet-2018.pdf?sfvrsn=5de41244_6> [retrieved on 20200824]
- ANOMYMUS: "120° Day & Night Vision System for Army Applications", 18 June 2019 (2019-06-18), pages 1 - 2, XP055724571, Retrieved from the Internet <URL:https://cdn.wartsila.com/docs/default-source/euroatlas-files/vision-systems/b6429-2_120-day-night-vision-system-leaflet-2018.pdf?sfvrsn=4ee41244_6> [retrieved on 20200824]
- ANONYMOUS: "Vision Systems", 18 June 2019 (2019-06-18), XP055725529, Retrieved from the Internet <URL:https://www.euroatlas.de/products-services/products/vision-systems> [retrieved on 20200827]

## Description

### TECHNICAL FIELD

The present application generally relates to a surveillance apparatus and method for generating surveillance image data. Furthermore, the present application relates especially to vehicles operating in demanding environmental conditions.

### BACKGROUND

This section illustrates useful background information without admission of any technique described herein representative of the state of the art.

Different solutions exist for providing surveillance image data or a vision system for vehicles.

For example, a camera system where a wide field-of-view is generated by a camera mounted to a motorized gimbal which combines images captured at different times and different directions into a single aggregate image. This system relies on covering a wide field-of-view by changing the direction of the camera and is able to simultaneously capture images from the multiple cameras.

Patent application WO 2010/120707A1 discloses vehicle-mountable imaging systems and methods that combine warping, fusing and stitching images from imaging sensors with partially overlapping FOVs.

Patent application US 2018/0253875 A1 discloses that images may be stitched using one of static steam-based stitching, dynamic seam-based stitching or dynamic warp stitching, or by applying different on of these stitching methods on different sub-areas of the images.

Article "Extreme Low Light Digital Vision" published in Defence Turkey on 1 April 2017, page 106, discloses a military driver night sight periscope with image fusion.

Internet publication "360° Advanced Situational Awareness Day & Night for Army Applications" by Wärtsilä Euroatlas, retrieved from internet URL: https://cdn.wartsila.com/docs/default-source/euroatlas-files/vision-systems/b6429-3 360 advance-situational-awareness-leaflet-2018.pdf?sfvrsn=5de412446 discloses a situational awareness systems that performs image fusion and image stitching.

Internet publication "120° Day & Night Vision System for Army Applications" by Wärtsilä, retrieved from internet URL: https://cdn.wartsila.com/docs/default-source/euroatlas-files/vision-systems/b6429-2 120-day-night-vision-system-leaflet-2018.pdf?sfvrsn=4ee41244 6 discloses a military driver sight system that has high resolution camera sensors and long wave infrared.

Internet publication "Vision systems" by Wärtsilä Euroatlas, retrieved from internet URL: https://www.euroatlas.de/product-services/products/vision-systems discloses night vision devices wherein two images are stitched in software to provide a wide field of view.

However, there are several aspects and demanding requirements that need to be considered for the design, development, and qualification of a camera system for military vehicles, for example.

A highly reliable and precisely engineered camera system is essential in meeting the mission objectives, and ensuring the safety and survival of the vehicle's crew in different operating modes and circumstances.

Thus, a solution is needed to enable accurate, efficient, and reliable method for providing surveillance image data or a vision system for vehicles.

### SUMMARY

Various aspects of examples of the invention are set out in the claims.

According to a first example aspect of the present invention, there is provided a surveillance apparatus carried by a vehicle for generating surveillance image data, comprising:
a plurality of camera devices configured to provide image data on different channels, wherein each channel is associated with at least two camera devices with substantially same field-of-view (FOV) angles but different line-of-sight (LOS) angles;
a communication interface for transceiving data;
at least one processor; and
at least one memory including computer program code;
the at least one memory and the computer program code configured to, with the at least one processor, cause the apparatus to:
   receive first image data and second image data of a first channel, wherein the first channel is a longwave infrared (LWIR) channel;
   receive third image data and fourth image data of a second channel, wherein the second channel is a visible spectrum (VIS) channel;
   generate a wide field of view model based on the first, second, third and fourth image data;
   determine a stitching mode, wherein image data of at least one channel is configured to be combined using a stitching algorithm;
   determine a first operating mode, wherein image data of one channel is configured to be processed;
   determine a second operating mode, wherein image data of both channels are configured to be combined;
   determine output mode, wherein the output mode defines configuration for image data to be provided on the display;
   receive selection information for the operating mode, the stitching mode and the output mode; and
   generate output data for the display based on the selection information and the wide field of view model, wherein in the stitching mode, image data is stitched per channel, by combination of dynamic and static stitching.

In an embodiment, static stitching components include at least one of following: vertical adaption information; perspective correction information; and cutting information.

In an embodiment, dynamic stitching components include at least one of following: contrast adaptation information; color adaptation information; and blending of image transition information.

In an embodiment, in the stitching mode, image stitching of different channels is configured to be arranged simultaneously.

In an embodiment, the apparatus is further configured to determine a backup operating mode, wherein a multiplexer function is activated to provide a video signal bypass image data for the display without processing the image data with the wide field of view model.

In an embodiment, the at least two camera devices associated to the first channel are arranged vertically alongside each other.

In an embodiment, the at least two camera devices associated to the second channel are arranged vertically alongside each other.

In an embodiment, the at least two camera devices associated to the first channel are arranged horizontally alongside the at least two camera devices associated to the second channel.

In an embodiment, the camera device comprises at least one of the following: LWIR sensor, SWIR sensor, CMOS sensor, image Intensified CMOS, and CCD sensor.

In an embodiment, in the second operating mode, combining the image data of both channels comprises at least one of stitching and fusing of the image data.

In an embodiment, in the second operating mode, combining the image data of both channels comprises a plurality of different fusion modes for the image data.

In an embodiment, the image data comprises video data and/or still image data.

In an embodiment, the output mode comprises at least one of the following: full screen (FS) mode, split screen (SS) mode, picture-in-picture (PIP) mode and fusion mode (FUS).

According to a second example aspect of the present invention, there is provided a computer-implemented method for generating surveillance image data by at least one processor of an apparatus carried by a vehicle, wherein a plurality of camera devices carried by the vehicle are configured to provide image data on different channels, and wherein each channel is associated with at least two camera devices with substantially same field-of-view (FOV) angles but different line-of-sight (LOS) angles, the method comprising:
receiving first image data and second image data of a first channel, wherein the first channel is a longwave infrared (LWIR) channel;
receiving third image data and fourth image data of a second channel, wherein the second channel is a visible spectrum (VIS) channel;
generating a wide field of view model based on the first, second, third and fourth image data;
determining a stitching mode, wherein image data of at least one channel is configured to be combined using a stitching algorithm;
determining a first operating mode, wherein image data of one channel is configured to be processed;
determining a second operating mode, wherein image data of both channels are configured to be combined;
determining output mode, wherein the output mode defines configuration for image data to be provided on the display;
receiving selection information for the operating mode, the stitching mode and the output mode; and
generating output data for a display based on the selection information and the wide field of view model, wherein in the stitching mode, image data is stitched per channel, by combination of dynamic and static stitching.

According to a third example aspect of the present invention, there is provided a computer program embodied on a computer readable medium comprising computer executable program code, which code, when executed by at least one processor of an apparatus carried by a vehicle, causes the apparatus to:
receive first image data and second image data of a first channel, wherein the first channel is a longwave infrared (LWIR) channel;
receive third image data and fourth image data of a second channel, wherein the second channel is a visible spectrum (VIS) channel, wherein a plurality of camera devices are configured to provide image data on different channels, and wherein each channel is associated with at least two camera devices carried by the device with substantially same field-of-view (FOV) angles but different line-of-sight (LOS) angles;
generate a wide field of view model based on the first, second, third and fourth image data;
determine a stitching mode, wherein image data of at least one channel is configured to be combined using a stitching algorithm;
determine a first operating mode, wherein image data of one channel is configured to be processed;
determine a second operating mode, wherein image data of both channels are configured to be combined;
determine output mode, wherein the output mode defines configuration for image data to be provided on the display;
receive selection information for the operating mode, the stitching mode and the output mode; and
generate output data for a display based on the selection information and the wide field of view model, wherein in the stitching mode, image data is stitched per channel, by combination of dynamic and static stitching.

Different non-binding example aspects and embodiments of the present invention have been illustrated in the foregoing. The embodiments in the foregoing are used merely to explain selected aspects or steps that may be utilized in implementations of the present invention as defined in the claims. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows a schematic picture of a vehicle and a system according to an example embodiment of the invention;
Fig. 2a shows a schematic picture of a camera system according to an example embodiment;
Fig. 2b shows a schematic picture of a vision system according to an example embodiment;
Fig. 2c presents an example block diagram of a control apparatus in which various embodiments of the invention may be applied;
Fig. 3 shows a schematic picture of a wide field of view model (WFVM) and related information flows according to an example embodiment;
Fig. 4 shows a schematic picture of a system according to an example embodiment;
Fig. 5 presents an example block diagram of a server apparatus;
Fig. 6 presents an example block diagram of a computer apparatus;
Fig. 7 shows a flow diagram showing operations in accordance with an example embodiment of the invention;
Fig. 8 shows a flow diagram showing operations related to stitching in accordance with an example embodiment of the invention; and
Fig. 9 shows a schematic picture of a wide field of view model (WFOV) and related data according to an example embodiment.

### DETAILED DESCRIPTION OF THE DRAWINGS

In the following description, like numbers denote like elements.

A military vehicle camera system needs to contend with harsh environmental conditions, such as gunfire shock, muzzle flash, vibration, high- and low- temperatures, solar load, water, sand, dust and mud. Different and fast changing light conditions while the vehicle is moving from dark shadow areas to bright sunlight requires an imaging sensor, which can quickly adapt and integrate. When firing the howitzer or machine gun, a strong muzzle flash can cause image blur when using common standard dynamic range CMOS or CCD imaging sensors. During fast climate change from cold to hot, fogging inside the camera housing could limit the camera view.

Climate and visibility conditions define further challenges, and weather conditions vary. There can be early morning rain or snow, desert sunlight with dust, sunset conditions, and extremely poor visibility.

No single sensor technology can cover all these operational conditions. Only a combination of two or more different image sensor technologies, such as Long Wavelength Infra-Red (LWIR), and Complementary Metal-Oxide-Semiconductor (optical sensor) CMOS or Charge Coupled Device (optical sensor) CCD sensors may provide an image under all such different conditions.

Horizontal field of view & detection recognition range define their own challenges. These parameters may actually be in contradiction. The larger the horizontal field of view for a single sensor camera system, the lower the Detection Recognition Identification (DRI) range may be. A single camera and lens optic with a wide horizontal field of view (HFOV) may have the disadvantage of optical distortion and a fisheye effect, which leads to poor depth perception. When combining two of the same cameras with lenses, and using an image stitching algorithm, the DRI range may be significantly better with a larger HFOV. A stitching algorithm, however, causes no dead zones on the vehicle, compared to different single camera installations.

Safety and reliability are key factors. The digital camera system needs to be available under any conditions, since freezing camera images could cause a crash or threaten the vehicle's operation. Thus, a modular software with different threats for each process is required. Each process needs to be monitored with a software watchdog. Additionally, a built-in hardware test is required in order to display system failure immediately.

System latency plays an important role on the system performance. The overall system latency should be as low as possible from glass to glass, as different studies have shown that a latency of more than 100 milliseconds causes the vehicle crew to suffer "sea sickness" while viewing the camera system monitor.

Human stress factor in combat situations are important too. During operations and combat situations the stress factor of the crew is high. Thus, the HMI of the vision system, including the software menu, needs to be simple and operating failure proof. Input keys needs to be illuminated, ergonomically arranged, and in compliance with relevant standards.

Resolution of the sensors and display panel have their own effects. As the imaging sensor resolution increases, the pixel size decreases, as does the low light sensitivity. For a low light sensitive camera system, a sensor pixel size of between 5 nm and 10 nm at 1280 x 768 up to 1920 x 1080 sensor resolution is the combination of one example embodiment. The display panel resolution and display ratio should be the same as, or very similar to, the imaging sensor resolution and sensor ratio, otherwise the monitor display may become a limiting factor for the vision system.

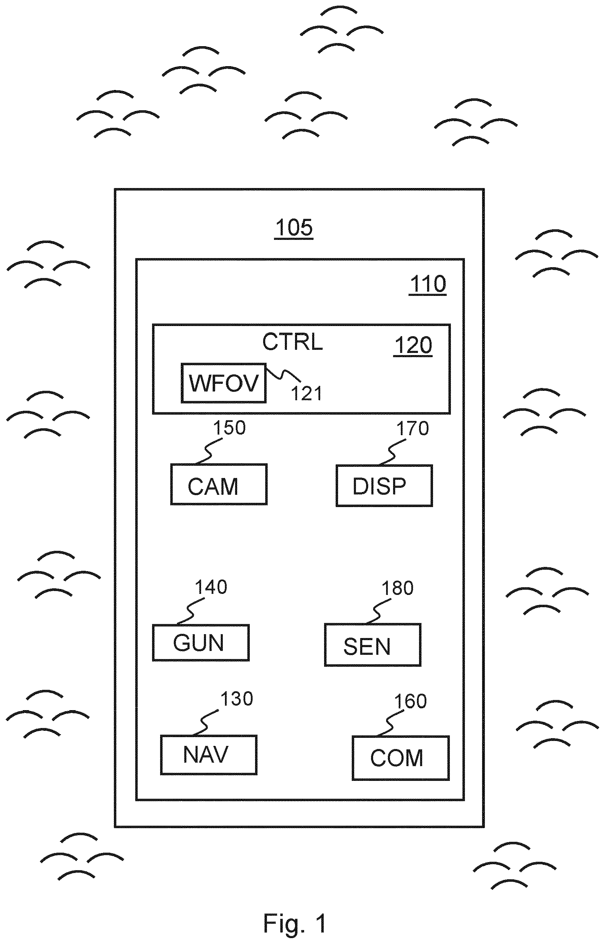

Fig. 1 shows a schematic picture of a vehicle 105, vehicle system 110 and a control apparatus 120 according to an example embodiment.

The vehicle system 110 comprises a control apparatus 120 configured to provide and operate a wide field of view model (WFOV) 121. The control apparatus 120 is also called as a surveillance apparatus when combined with the cameras 150 and a display 170.

When planning a route between endpoints or waypoints, for example, route plan information may be determined. The wide field of view model (WFOV) 121 is maintained and operated by the control apparatus 120 and may receive route plan information for a dedicated route. The route plan information may be generated by the control apparatus 120 or received by the control apparatus 120. The route plan information is generated using information from navigation system 130 that is configured to provide route plan related information based on weather conditions, time schedule, safety aspects and fuel consumption (e.g. based on estimated fuel consumption and weather forecast), for example. As part of the planning steps an estimate of the resources available and possible constraints to the route plan are needed as well. Topographic and soil information associated to the dedicated route may be determined using the route plan information. Furthermore, energy consumption information associated to the dedicated route may be determined using the route plan information. The route plan information may be adjusted based on the wide field of view model (WFOV) 121, the topographic and soil information and the operational characteristic information, automatically.

The control apparatus 120 may be configured to receive environmental information via communication link (COM) 160 or via vehicle sensors (SEN) 180, for example. The environmental information comprises at least one of the following: weather information; obstacle information; topography information; and brightness information.

Gun system (GUN) 140 may comprise any guns, weapons, or ammunition relating to the firepower of the vehicle 105. The gun system (GUN) 140 may provide operational characteristics for the control apparatus 120, such as offensive information. The offensive information may comprise, for example, currently active gun and ammunition related information of the vehicle.

In an embodiment, the operational characteristics received by the control apparatus 120 may also comprise defensive information. The defensive information may comprise, for example, detected enemy threat related information of the vehicle. Such information may be determined based on information received via sensors 180 including radars, camera system 150 or via communication link 160, for example.

A display system (DISP) 170 may be configured to provide overall status information of the vehicle 105. The display 170 may be external to the control apparatus 120, integrated as part of it, or both.

In an embodiment, an advanced vehicle system 110 of the vehicle 105 is configured to operate in degraded visual environments (DVE) and is modular and can be integrated within various versions of Main Battle Tank(s), Armoured Personnel Carrier (s) (APC) and other special purpose vehicles. A number of different advanced cameras 150, configurations and packages are possible. Various embedded processing units 120 can be connected to operate in a cluster as a full 360° system.

In an embodiment, by establishing a wide field of view model (WFOV) 121 for communicating between systems 120-180 it is possible for the on-board systems to negotiate an optimal solution for the route or some activity. Top priority for optimization may be defined to be safety, and second and third priority can be set by the vehicle operator (optimal offensive or defensive position, energy efficiency, fuel consumption, speed/time, etc.), for example. The wide field of view model (WFOV) 121 may operates as a virtual pilot for a route.

The wide field of view model (WFOV) 121 solution will allow different levels of automation within the vehicle 105. In first operation mode, the wide field of view model (WFOV) 121 may be configured to provide a route plan, which the crew can use for scheduling their activities. In second operation mode, the wide field of view model (WFOV) 121 may be configured to provide an embedded solution, wherein the sub-systems can notify the crew based on the plan, when to perform certain tasks or be switched on or set to standby. This notification may be repeated on the main control display or remote-control station. In third operation mode, wide field of view model (WFOV) 121 may be configured to provide a solution to be fully automated and automatically executing the plan of the wide field of view model (WFOV) 121 with merely notification provided to the crew or remote-control station when performing different automated tasks

No matter a plurality of different elements 120-180 is disclosed in Fig. 1, not all are mandatory for embodiments of the invention. Only mandatory features are control apparatus 120 and camera system 150.

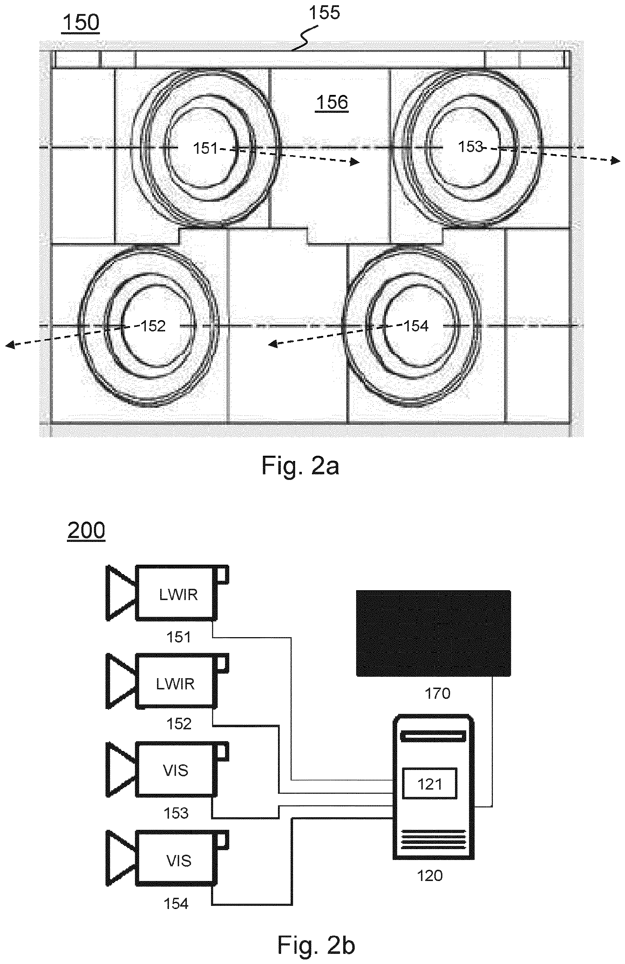

Fig. 2a shows a schematic picture of a camera system 150 according to an example embodiment.

Fig. 2b shows a schematic picture of a vision system 200 according to an example embodiment. The vision system 200 is also understood as a surveillance apparatus 200.

The digital vision system 200 comprises a 120° camera housing 155, image acquisition, and processing software (wide field of view model (WFOV) 121 of Fig. 1) that supports multiple cameras 151-154 (e.g. four). The system 200 has 2 x identical camera pairs 151-152, 153-154 and associated lenses. Additional cameras with camera link interfaces can be easily integrated without changing the software 121.

In an embodiment, a 120° rear view camera system 200 may be based on the same embedded processing unit 120, and use the same image processing software 121, as the day & night sight driver periscope system, for example.

In an embodiment, all components 120, 151-155, 170 are selected to fulfil shock and vibration requirements according to MIL-STD-810G tracked vehicle vibrations. The electronics and sensors are housed in a modular body, which is protection class IP68K.

The camera housing 155 is all weather housing. The camera windows can be cleaned with water and air when sand & dust or mud are limiting the view. The operator can activate the cleaning via monitor keyboard if required. The 120° camera housing 155 is designed to withstand a sand storm acc. MIL-STD-810F, Method 510.4. The housing material and surface treatment comply with salt and fog requirements of MIL-STD-810F, Method 509.4. The 120° camera system provides high performance, low latency, with easy and intuitive operation.

In an embodiment, the housing 155 comprises a front surface 156, wherein the plurality of camera devices 151-154 are arranged.

In an embodiment, a plurality of camera devices 151-154 are configured to provide image data on different channels, wherein each channel is associated with at least two camera devices with substantially same field-of-view (FOV) angle but different line-of-sight (LOS) angle.

The camera devices 151-152 are configured to operate on a first channel that is a longwave infrared (LWIR) channel. The camera devices 153-154 are configured to operate on a second channel that is a visible infrared (VIS) channel.

In an embodiment, the at least two camera devices 151-152 associated to the first channel are arranged vertically alongside each other. Correspondingly, the at least two camera devices 153-154 associated to the second channel are arranged vertically alongside each other.

Furthermore, the at least two camera devices 151-152 associated to the first channel are arranged horizontally alongside the at least two camera devices 153-154 associated to the second channel.

Various system features support the chief of section for clearing the vehicle surrounding during day and night. Software features like digital zoom, special image contrast enhancement algorithm which display image details under difficult environmental conditions.

In an embodiment, different operating modes are determined. In split screen mode LWIR and CMOS images are displayed simultaneously. In fusion mode, both sensor images LWIR and CMOS are fused into one full screen image.

A recording function may be integrated with several days of recording capability, embedded video date & time stamp. This function can be used for mission analysis and training purposes.

In an embodiment, the camera device 151-154 comprises at least one of the following: IR sensor, LWIR sensor, CMOS sensor, and CCD sensor. The at least two camera devices 151-152 associated to the first channel may comprise IR camera devices with resolution of 640 x 480, for example. The at least two camera devices 153-154 associated to the second channel may comprise CMOS camera devices with resolution of 1920 x 1080 for example.

In an embodiment, the housing 155 is rotatably and/or tiltably arranged to a vehicle. The rotation and/or tilting of the housing 155 may be controlled by the control apparatus or its operator.

In an embodiment, a field-of-view (FOV) angle of each camera 151-154 is 60°. Thus, image data for the first channel extends over the field-of-view (FOV) angle of 120° when the camera devices 151-152 are arranged as in Fig. 2a where the angular difference of line of sight (LOS) between camera devices 151-152 is 30°. Correspondingly, image data for the second channel extends over the field-of-view (FOV) angle of 120° when the camera devices 153-154 are arranged as in Fig. 2a where the angular difference of line of sight (LOS) between camera devices 153-154 is 30°. By doing that, it is possible to provide field-of-view (FOV) angle of the output data to be 120°.

In an embodiment, the wide field of view model (WFOV) 121 of the control apparatus 120 operates as follows. The control apparatus 120 receives first image data from a first camera device 151 and second image data from a second camera device 152 of a first channel (LWIR). The control apparatus 120 also receives third image data from a third camera device 153 and fourth image data from a fourth camera device 154 of a second channel (VIS). Then, the wide field of view model 121 is generated based on the first, second, third and fourth image data. The wide field of view model 121 is configured to utilize a stitching mode, wherein image data is stitched per channel, by combination of dynamic and static stitching, a first operating mode, wherein image data of one channel is configured to be processed, a second operating mode, wherein image data of both channels are configured to be combined, and an output mode, wherein the output mode defines configuration for image data to be provided on the display. Once selection information for the modes is received, output data is generated for the display 170 based on the selection information and the wide field of view model 121. Selection information may be received from operator or determined automatically by the model 121.

In an embodiment, the images from the LWIR cameras 151-152 are stitched in the software model 121, which results in an image covering a 120° horizontal field of view and a high total resolution of 1280 x 960 pixels for the LWIR image, and 3840 x 2160 pixels for the VIS (visible) CMOS image.

The use of two camera pairs 151-152, 153-154 with 60° HFOV optical lens results in a higher Detection Recognition Identification (DRI) range than with a single camera having a wide HFOV lens and enables a 120° horizontal field of view. A single camera and an optical lens with a wide HFOV has the disadvantages of optical distortion and the fisheye effect among others.

The vision system 200 overcomes this by stitching two camera images to provide the highest DRI range in its class.

The stitched LWIR and VIS-CMOS images can be displayed in split screen mode simultaneously in first mode, full screen mode LWIR, or CMOS in second mode, and image fusion mode in third mode.

The software of the wide field of view model (WFOV) 121 may be divided into several modules. Each module is responsible for a defined set of functionalities. Multiple processes are used to group and execute a subset of modules, while each process can execute several threads.

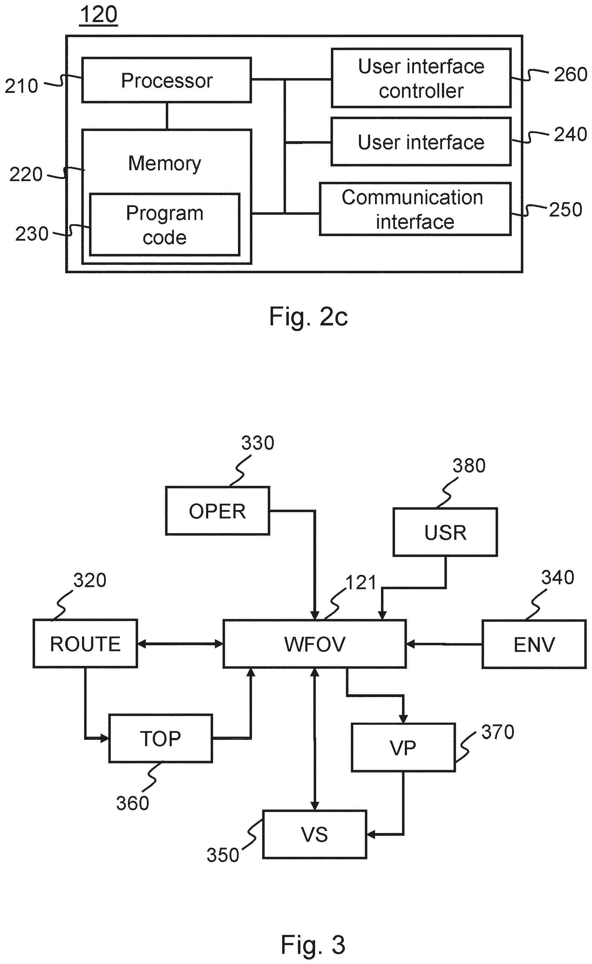

Communication between the processes is established by message based IPC protocols and shared memory 220 (see Fig. 2c). Communication between the modules 151-154, 120-121, 170 inside the same process is implemented using shared memory 220.

The reason for grouping modules 151-154, 120-121, 170 into a single process is to decrease the latency of communication between the modules. Using a message based IPC protocol for communication between the processes allows separating functionality, which keeps the parts simple and avoids complexity.

Transmission of image data between the camera control processes and the main process is carried out using shared memory to reduce the overall latency.

For logging and watchdog functionality, systemd may be used. Each process has to regularly notify the system process, otherwise it will be restarted. All process actions are logged into the system's database.

A wide dynamic range CMOS camera sensor may be integrated within camera devices 153-154, for example, for the 120° camera system. The camera sensor signal response is logarithmic through more than 7 decades (>140 dB). The logarithmic sensor provides an almost infinite dynamic range, which results in no saturation, a see through halo, and no loss of details.

When driving on bumpy roads the horizon line changes. With a traditional camera sensor, when shifting from a dominant bright sky to a dominant dark background, linear sensors either lose information at the ground or saturate in the sky. With a logarithmic sensor and the wide field of view model (WFOV) 121, all information is always captured.

In order to increase the low light sensitivity to night level 5, an image intensifier tube can be combined with the wide dynamic range CMOS camera sensor. This WDR CMOS image intensified camera may be integrated also into the driver sight periscope and may be supported by the developed image processing software.

Fig. 2c presents an example block diagram of a control apparatus 120 in which various embodiments of the invention may be applied. The control apparatus 120 is configured to maintain and/or operate the wide field of view model (WFOV).

The general structure of the control apparatus 120 comprises a user interface 240, a communication interface 250, a processor 210, and a memory 220 coupled to the processor 210. The control apparatus 120 further comprises software 230 stored in the memory 220 and operable to be loaded into and executed in the processor 210. The software 230 may comprise one or more software modules and can be in the form of a computer program product, such as the wide field of view model (WFOV) 121 of Fig. 1. The control apparatus 120 may further comprise a user interface controller 260. The user interface 240 may comprise e.g. the display 170 of Fig. 1, 2b.

The processor 210 may be, e.g., a central processing unit (CPU), a microprocessor, a digital signal processor (DSP), a graphics processing unit, or the like. Fig. 2c shows one processor 210, but the apparatus 120 may comprise a plurality of processors.

The memory 220 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 120 may comprise a plurality of memories. The memory 220 may be constructed as a part of the apparatus 120 or it may be inserted into a slot, port, or the like of the apparatus 120 by a user. The memory 220 may serve the sole purpose of storing data, or it may be constructed as a part of an apparatus serving other purposes, such as processing data. A proprietary application, such as computer program code for the wide field of view model (WFOV), route related data, vehicle related data, gun data, sensor data or environmental data may be stored to the memory 220.

In an embodiment, the apparatus 120 is configured to perform a computer-implemented method for generating surveillance image data, wherein a plurality of camera devices are configured to provide image data on different channels, and wherein each channel is associated with at least two camera devices with substantially same field-of-view (FOV) angle but different line-of-sight (LOS) angle, the method comprising: receiving first image data and second image data of a first channel, wherein the first channel is a longwave infrared (LWIR) channel; receiving third image data and fourth image data of a second channel, wherein the second channel is a visible spectrum (VIS) channel; generating a wide field of view model based on the first, second, third and fourth image data; determining a stitching mode, wherein image data is stitched per channel, by combination of dynamic and static stictching, determining a first operating mode, wherein image data of one channel is configured to be processed; determining a second operating mode, wherein image data of both channels are configured to be combined; determining output mode, wherein the output mode defines configuration for image data to be provided on the display; receiving selection information for the operating mode, the stitching mode and the output mode; and generating output data for a display based on the selection information and the wide field of view model.

The user interface controller 260 or the user interface 240 may comprise circuitry for receiving input from a user of the control apparatus 120 (an operator), e.g., via a keyboard, graphical user interface shown on the display of the user interfaces 240 of the control apparatus 120, speech recognition circuitry, or an accessory device, such as a headset, and for providing output to the user via, e.g., a graphical user interface or a loudspeaker.

The communication interface module 250 implements at least part of data transmission. The communication interface module 250 may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution) or 5G radio module. The wired interface may comprise such as RS-232, SPI, I2C, Ethernet, universal serial bus (USB) or any other standard for example. The communication interface module 250 may be integrated into the control apparatus 120, or into an adapter, card or the like that may be inserted into a suitable slot or port of the control apparatus 120. The communication interface module 250 may support one radio interface technology or a plurality of technologies. The control apparatus 120 may comprise a plurality of communication interface modules 250.

In an embodiment, the control apparatus 120 is configured to connect with the camera devices via the communication interface 250.

A skilled person appreciates that in addition to the elements shown in Fig. 2c, the control apparatus 120 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the control apparatus 120 may comprise a disposable or rechargeable battery (not shown) for powering when external power if external power supply is not available.

In an embodiment, the control apparatus 120 comprises speech recognition means. Using these means, a pre-defined phrase may be recognized from the speech and translated into control information for the apparatus 120, for example.

External devices or sub-systems (e.g. elements 130-180 of Fig. 1) may be connected to the control apparatus 120 using communication interface 250 of the apparatus 120 or using a direct connection to the internal bus of the apparatus 120.

Fig. 3 shows a schematic picture of a wide field of view model (WFOV) 121 and related information flows according to an example embodiment.

Elements 320-380 may have alternative ways to connect with each other and Fig. 3 only shows one example embodiment. Furthermore, only connections that relate somehow to the WFOV 121 are illustrated. For example, environmental information 340 may be also used for route planning and thus for the route plan information 320 but direct connection between blocks 320 and 340 is not shown for simplifying the Fig. 3.

The WFOV 121 can be configured to operate as a stand-alone solution or as an integrated part of the control/management system of the vehicle. The WFOV 121 may enable automation of vision system 350 control, and further enables a higher degree of autonomous operation on board conventional vehicles and paves the way for vision and route management for autonomous vehicles.

Vision system information 350 provided to the direction of the wide field of view model (WFOV) 121 comprises at least image data of different channels and camera devices.

In an embodiment, the wide field of view model (WFOV) 121 may be interfaced with the camera system, navigation system, automation system, power management system and sub-systems like gun solutions, as shown in Fig. 1, for example.

The wide field of view model (WFOV) 121 may be arranged to receive route plan information 320 including information like weather forecasts, navigation information for the dedicated route, waypoint information for the dedicated route, environmental restrictions and other relevant information. The route plan information 320 may be received from the navigation system or the route plan information 320 may be generated by the control apparatus 120. The route plan information 320 may comprise at least one of the following: navigation information; and environmental information. The navigation information may comprise at least one of the following: destination information of the dedicated route; remaining travel time of the dedicated route; remaining distance of the dedicated route; navigation information for the dedicated route; waypoint information for the dedicated route; and environmental restriction information of the dedicated route.

Topography information 360 associated to the dedicated route may be determined using the route plan information 320. The topography information 360 may comprise information on topographical details of the route or nearby area, as well as details of soil, for example. Furthermore, it may comprise information on possible obstacles or other objects around the vehicle that may affect either to movements, cover or visibility of the vision system 350 including cameras.

In an embodiment, the wide field of view model (WFOV) 121 may be configured to automate interaction between navigational route planning and setting up different vision system 350 modes or camera parameters.

In an embodiment, the control apparatus 120 may be configured to determine a control task relating to the route plan information 320 automatically based on the wide field of view model (WFOV) 121. Thus, the route plan information 320 that is determined for a dedicated route, may be dynamically adjusted automatically using the wide field of view model (WFOV) 121.

In an embodiment, the control apparatus 120 may be configured to dynamically adjust navigation information of the route plan information. Furthermore, the control apparatus 120 may be configured to dynamically adjust navigation information for the dedicated route, and, for example, dynamically adjusting waypoint information for the dedicated route. For example, the route with optimal visibility and/or cover may be determined.

In an embodiment, the control apparatus 120 may be configured to dynamically adjust destination information or remaining travel time of the dedicated route.

The wide field of view model (WFOV) 121 is further arranged to receive characteristic information 330 representing at least one operating characteristic of the vehicle. The operating characteristic information 330 of the vehicle may comprise at least one of the following: currently active gun system and ammunition; status of search light system; and status information of energy storage sub-system, such as a battery system.

The wide field of view model (WFOV) 121 may further be arranged to receive environmental information 340 separate or in addition to possible environmental information included in the route plan information 320. The environmental information 340 may represent at least one current environmental characteristic of the vehicle, such as soil characteristic information, weather information; wind information; air pressure information; ice information; and roll or pitch information of the vehicle.

In an embodiment, if there has not been identified any violations of possible constraints, the wide field of view model (WFOV) 121 may generate at least one task for controlling vision system 350 (or 200 in Fig. 2b) with or without some associated search light within the vehicle automatically based on the wide field of view model (WFOV) 121 and control the associated element based on the determined task.

For example, the route planning system may carry out following procedures: A) Calculate and balance to what degree a route deviation will benefit the overall vision system. B) Generate an operational plan for when to change between different vision system operation modes during the planned route. C) If the preferred target time is known, calculate the optimal speed profile including staying longer in optimal areas for vision system and avoiding waiting time in low quality vision areas. Additionally, the system may collect real operating data, compare it with the original prediction/recommendation, and automatically improve the recommendation for later routes operated by the wide field of view model (WFOV) 121.

In an embodiment, if there has not been identified any violations of possible constraints, the wide field of view model (WFOV) 121 may generate vision plan (VP) 370 and utilize the vision plan (VP) 370 for determining control tasks relating to vision system 350 or route plan 320 within the vehicle automatically based on the wide field of view model (WFOV) 121. The vision plan may comprise, for example, settings when different operating modes (split, single, fusion) is activated, rotation/tilting angle for the camera housing, activation of search light or laser light, cleaning camera lenses, and detailed camera device settings or image data processing parameters.

While cruising and performing transit during the route, the wide field of view model (WFOV) 121 may maintain a dynamic and up-to-date situational awareness in relation to the executed route (navigation) and vision plan and the status from all camera devices and sensors, for example. If the situation changes and a system changes health status, the wide field of view model (WFOV) 121 may be configured to update the vision plan 370 including tasks and automatically notifying the navigation system to allow the navigation system to modify the route plan information accordingly.

Because the wide field of view model (WFOV) 121 has access to information about optimal operation conditions of the sub-systems, the model can help to determine optimal operating mode, wherein only confirmed request from the operator is needed, and the wide field of view model (WFOV) 121 may allow running sub-systems outside the optimal operation conditions.

The vision plan 370 information can be provided in a first mode as a schedule made available to the crew to follow. The crew may perform the scheduled tasks for the vision system 350 based on the vision plan 370. In a second mode, the vision plan 370 may be embedded in the main display of the vehicle, for example. The system may be further configured to provide an integrated guidance tool to prompt the operator when a task should take place and by acknowledgement from the operator enable and perform the task and end the task when performed. A third mode allows a fully automated solution, where the operator may only be informed about the vision plan 370 or the tasks determined by the wide field of view model (WFOV) 121. Optionally, current status of the model and next steps may be informed to the operator but the wide field of view model (WFOV) 121 is configured to control elements automatically. In such embodiment the vision plan 370 may be optional.

It is possible to override the wide field of view model (WFOV) 121 by changing it to standby mode and allowing a manual operation of the visual system 350 and the sub-systems. At the third mode, the wide field of view model (WFOV) 121 can operate autonomously together with the vision system 350 and/or navigation system and all the sub-systems. Instead of notifying the operator, the wide field of view model (WFOV) 121 may log (e.g. using the vision plan 370) the activities and events and will only request assistance from the mission controller or a human operator in case the wide field of view model (WFOV) 121 is facing a situation it cannot handle or it is not available for operation.

In an embodiment, the energy vision plan 370 may also comprise automatic information being sent to mission control room. The information being sent may relate to, for example, estimate of enemy equipment or persons detected, or supplies needed when at next service, for example. By doing that the mission control can make a better estimate of the overall situation. The mission control system may have a dynamic wide field of view model (WFOV) 121 of its own that receives inputs from multiple vehicles.

In an embodiment, the wide field of view model (WFOV) 121 is configured to receive input from an operator (USR) 380 either on-board the vehicle or remote at other vehicle, for example. In certain pre-defined operating modes or tasks, it may be required that operator acknowledgement is received from the operator (USR) 380 for the determined task by the wide field of view model (WFOV) 121 before controlling an automation element of the vehicle based on the determined task in response to the received operator acknowledgement.

In an embodiment, the wide field of view model (WFOV) 121 may be updated in real-time using the route plan information 320, the environmental information 340 and the operational characteristics 330. In an embodiment, when receiving confirmation from the operator 380 of the task being performed, the wide field of view model (WFOV) 121 is updated in response to the received confirmation.

In an embodiment, in autonomous vehicle operation mode, automatic route planning may be executed to provide the route plan information 320 for a safe and optimized route taking into account planned destination and ETA, up to date chart data from the electronic chart library, predicted environmental conditions as well as status information of different sub-systems. Furthermore, a contingency plan to stop the vehicle safely in case of emergency is generated along the route for every leg or even leg segment, for example. The approval mechanisms of the route plan 320 may vary depending on autonomy level in use, authority rule sets and customer specifications. Once the route plan is activated and being executed, the control system is permanently monitoring and adapting the route execution with regards to track- and schedule keeping) if necessary. Reasons for adaptation can be, for example: new destination and/or new ETA, differences between predicted and real environmental conditions, collision avoidance maneuvers, and unexpected changes in the vehicle (i.e. unforeseen equipment failure).

In an embodiment, the route plan information 320 comprises at least one of the following: navigation information for a waypoint or a destination; target time or arrival information for the waypoint or the destination; and environmental information associated to at least one route of the route plan information.

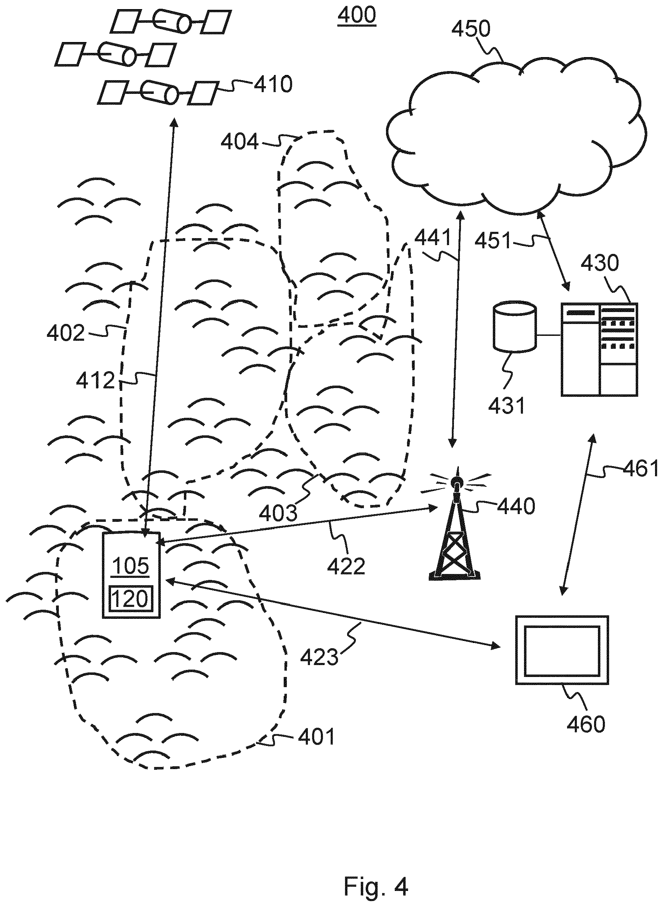

Fig. 4 shows a schematic picture of a system 400 according to an example embodiment. A vehicle 105 comprises a control apparatus 120 for controlling vision system.

The control apparatus 120 is capable of downloading and locally executing software program code. The software program code may be a client application of a service whose possible server application is running on a server apparatus 430, 431 of the system 400. The control apparatus 120 may comprise a capturing device, such a sensor device, for providing vehicle related signals and data. The sensor device may comprise an accelerometer, an inclinometer, a gyroscope, a wind sensor, a positioning sensor, a temperature sensor, a pressure sensor, or a camera, for example. The camera may also be used to provide video data and a microphone may be used for providing audio data, for example. The sensor device may also provide environmental signals and data.

The control apparatus 120 is configured to generate surveillance image data, comprising: a plurality of camera devices configured to provide image data on different channels, wherein each channel is associated with at least two camera devices with substantially same field-of-view (FOV) angle but different line-of-sight (LOS) angle, and the apparatus 120 is configured to: receive first image data and second image data of a first channel; receive third image data and fourth image data of a second channel; generate a wide field of view model based on the first, second, third and fourth image data; determine a stitching mode, wherein image data of at least one channel is configured to be combined using a stitching algorithm; determine a first operating mode, wherein image data of one channel is configured to be processed; determine a second operating mode, wherein image data of both channels are configured to be combined; determine output mode, wherein the output mode defines configuration for image data to be provided on the display; receive selection information for the operating mode, the stitching mode and the output mode; and generate output data for the display based on the selection information and the wide field of view model.

Environmental status changes around the vehicle on different areas when moving around. There may be obstacles, different lighting conditions, shades, raining, snowing, fog, dust etc. that may affect visibility around the vehicle.

In an embodiment, between waypoints, the vehicle 105 may choose different routes over the area and depending on the route there may be a plurality of areas or regions 401-404 with different conditions. The vehicle 105 route may be optimized using the wide field of view model (WFOV) 121 so that the vehicle 105 stays longer periods on areas 401-404 more optimal for visibility or cover, for example. Also the operation mode of the vision system may be automatically determined based on different areas 410-404 under control of the wide field of view model (WFOV) 121.

The control apparatus 120 may be configured to be connectable to a public network 450, such as Internet, directly via local connection or via a wireless communication network 440 over a wireless connection 422. The wireless connection 422 may comprise a mobile cellular network, a satellite network or a wireless local area network (WLAN), for example. The wireless communication network 440 may be connected to a public data communication network 450, for example the Internet, over a data connection 441. The apparatus 120 may be configured to be connectable to the public data communication network 450, for example the Internet, directly over a data connection that may comprise a fixed or wireless mobile broadband access. The wireless communication network 440 may be connected to a server apparatus 430 of the system 400, over a data connection.

The control apparatus 120 may set up local connections within the vehicle system 110 with at least one capturing device and at least one automation device. The capturing device, such as a sensor, may be integrated to the apparatus 120, attached to the body of the vehicle and connected to the vehicle control system or arranged as separate sensor device and connectable to the network 450 over separate connection.

The apparatus 120 and its client application may be configured to log into a vehicle data service run on a server 430, for example. The server apparatus 430, 431 may be used to maintain any data, such as image data, route plan information, environmental data, or task related information, for example.

In particular, real-time interaction may be provided between the apparatus 120 and the server 430 to collaborate for dynamic vision system related data over a network 450. Real-time interaction may also be provided between the apparatus 120 and the remote user device 460 to collaborate for any wide field of view model (WFOV) 121 related data over a network 450, 461.

The apparatus 120 may be connected to a plurality of different capturing devices and instruments and the apparatus 120 may be configured to select which sensor devices is actively collaborated with.

A user/operator of the apparatus 120 or the remote user device 460 may need to be logged in with user credentials to a chosen service of the network server 130.

The system 400 may comprise a server apparatus 430, which comprises a storage device 431 for storing service data, service metrics and subscriber information, over data connection 451. The service data may comprise wide field of view model (WFOV) 121 related data, route related data, environmental data, image data, waypoint properties related data, vehicle related data, navigation information, configuration data, task information for the automation system, sensor data, user input data, real-time collaboration data, predefined settings, and attribute data, for example.

In particular, configuration information or application download information for any apparatus may be automatically downloaded and configured by the server 430. Thus, the user of the devices may not need to do any initialization or configuration for the service. The system server 430 may also take care of account creation process for the service, such sensor devices, apparatuses and users. Timing of the download may also be configured to be automatic and optimized in view of the vehicle travel plan. For example, download may be automatically taking place when the vehicle is under service in base.

The association of the devices can be one-time or stored persistently on any of the devices or the server 430.

In particular, authentication of a sensor device or apparatus 120 on a system server 430 may utilize hardware or SIM credentials, such as International Mobile Equipment Identity (IMEI) or International Mobile Subscriber Identity (IMSI). The sensor device or apparatus 120 may transmit authentication information comprising IMEI and/or IMSI, for example, to the system server 430. The system server 430 authenticates the device by comparing the received authentication information to authentication information of registered users / devices / vehicles / apparatuses stored at the system server database 431, for example. Such authentication information may be used for pairing the devices and/or apparatuses to generate association between them for a vehicle data connection.

A service web application may be used for configuration of a system. The service web application may be run on any user device, admin device, or a remote-control device 460, such as a personal computer connected to a public data network, such as Internet 450, for example. The control apparatus 460 may also be connected locally to the apparatus 120 over a local connection 423 and may utilize the network connections of the apparatus 120 for configuration purposes. The service web application of the control apparatus may provide searching/adding instruments, determining attributes, device setup and configuration, for example. The service web application of the control apparatus 460 may be a general configuration tool for tasks being too complex to be performed on the user interface of the apparatus 120, for example.

A remote-control apparatus 460 may be authenticated and configuration data sent from the control apparatus 460 to the system server 430, 431, wherein configuration settings may be modified based on the received data. In an embodiment, the modified settings may then be sent to the apparatus 120 over the network 450 and the local connection or the wireless operator. The modified settings may also be sent to external devices correspondingly, through the apparatus 120 or directly over the network 450, for example.

The sensor device may be wireless or wired.

The system 400 may also comprise a plurality of satellites 410 in orbit about the Earth. The orbit of each satellite 410 is not necessarily synchronous with the orbits of other satellites and, in fact, is likely asynchronous. A global positioning system receiver apparatus such as the ones described in connection with preferred embodiments of the present invention is shown receiving spread spectrum Global Navigation Satellite System global positioning system (GNSS) satellite signals 412 from the various satellites 410.

The remote-control apparatus 460 may be configured to be operated by a remote operator of the vehicle system 110. The remote-control apparatus 460 may be arranged on a remote station, on the vehicle or on another vehicle, for example.

The input for an automatic route plan may come from a Remote Control Centre (RCC), the Remote Operation Centre (ROC) or the Fleet Operation Centre (FOC), depending on the level of autonomy. A mission manager process may receive the order and provide it to the route planning and execution process of the apparatus 120. The mission order contains at least destination and planned arrival time. Additional parameters i.e. driven by cargo (avoiding of areas with predicted danger state above a certain level) can be part of it. Based on input from 1) and 2) above and defined safety precautions / margins (i.e. safety corridor) an automatic routing algorithm will find in the first instance a geometrically optimal route from A to B. Geometric adaptations as well as the generation of the schedule by means of considering information's from 3), 5) and 6) will be performed by an optimization engine afterwards.

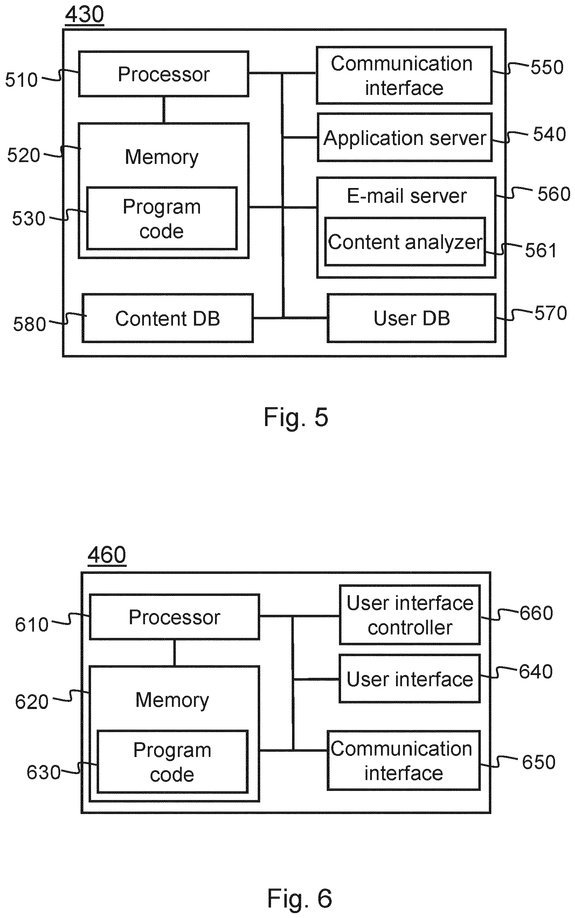

Fig. 5 presents an example block diagram of a server 430.

The general structure of the server apparatus 430 comprises a processor 510, and a memory 520 coupled to the processor 510. The server apparatus 130 further comprises software 530 stored in the memory 520 and operable to be loaded into and executed in the processor 510. The software 530 may comprise one or more software modules and can be in the form of a computer program product.

The processor 510 may be, e.g., a central processing unit (CPU), a microprocessor, a digital signal processor (DSP), a graphics processing unit, or the like. Fig. 5 shows one processor 510, but the server apparatus 430 may comprise a plurality of processors.

The memory 520 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The server apparatus 430 may comprise a plurality of memories. The memory 520 may be constructed as a part of the server apparatus 430 or it may be inserted into a slot, port, or the like of the server apparatus 430 by a user. The memory 520 may serve the sole purpose of storing data, or it may be constructed as a part of an apparatus serving other purposes, such as processing data.

The communication interface module 550 implements at least part of radio transmission. The communication interface module 550 may comprise, e.g., a wireless or a wired interface module. The communication interface module 550 may be integrated into the server apparatus 430, or into an adapter, card or the like that may be inserted into a suitable slot or port of the server apparatus 430. The communication interface module 550 may support one radio interface technology or a plurality of technologies.

The e-mail server process 560, which receives e-mail messages sent from control apparatuses 120 and computer apparatuses 460 via the network 450. The server 560 may comprise a content analyzer module 561, which checks if the content of the received message meets the criteria that are set for new activity data item of the service. The content analyzer module 561 may for example check whether the e-mail message contains a valid activity data item to be used for wide field of view model (WFOV) 121 processing, for example. The valid data item received by the e-mail server is then sent to an application server 540, which provides application services e.g. relating to the user accounts stored in a user database 570 and content of the content management service. Content provided by the service system 100 is stored in a content database 580.

A skilled person appreciates that in addition to the elements shown in Fig. 5, the server apparatus 130 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like.

Fig. 6 presents an example block diagram of a computer apparatus 460. The computer apparatus 460 may be a user equipment (UE), user device or apparatus, such as a mobile terminal, a smart phone, a laptop computer, a desktop computer or other communication device.

The general structure of the computer apparatus 460 comprises corresponding elements as earlier discussed for the apparatus 120.

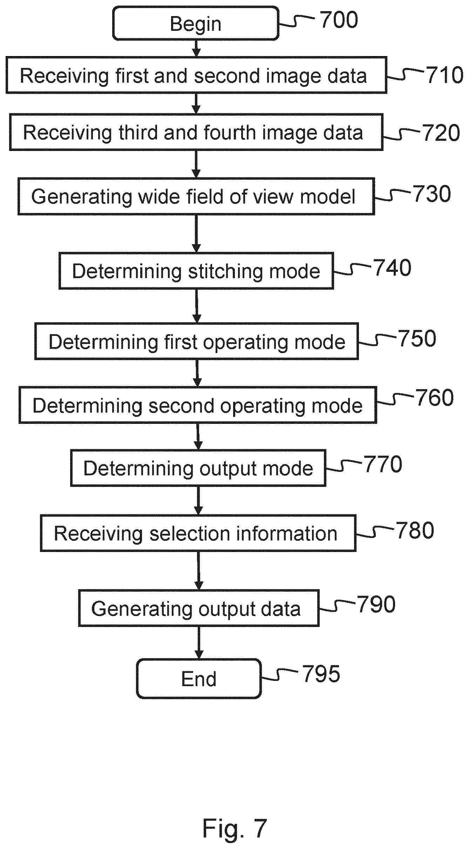

Fig. 7 shows a flow diagram showing operations in accordance with an example embodiment of the invention.

In step 700, the computer-implemented method for generating surveillance image data by at least one processor of a surveillance apparatus carried by a vehicle, wherein a plurality of camera devices carried by the vehicle are configured to provide image data on different channels, and wherein each channel is associated with at least two camera devices with substantially same field-of-view (FOV) angles but different line-of-sight (LOS) angles, is started.

In step 710, first image data and second image data of a first channel, wherein the first channel is a longwave infrared channel, are received. In step 720, third image data and fourth image data of a second channel, wherein the second channel is a visible spectrum infrared channel are received.

In step 730, a wide field of view model is generated based on the first, second, third and fourth image data. In step 740, a stitching mode is determined, wherein image data of each channel is configured to be combined using a stitching algorithm.

In an embodiment, in the stitching mode, image data is stitched per channel, and realized as combination of dynamic and static stitching. The static stitching components include at least some of the following: vertical adaption information; perspective correction information; and cutting information.

In an embodiment, dynamic stitching components include at least some of the following: contrast adaptation information; color adaptation information; and blending of image transition information.

In an embodiment, in the stitching mode, image stitching of various number of channels is possible at the same time.

In an embodiment, the method may further comprise determining a backup operating mode, wherein a multiplexer function is activated to provide a video signal bypass image data for the display without processing the image data with the wide field of view model.

In step 750, a first operating mode is determined, wherein image data of one channel is configured to be processed. In step 760, a second operating mode is determined, wherein image data of both channels are configured to be combined.

In step 770, output mode is determined, wherein the output mode defines configuration for image data to be provided on the display.

In step 780, selection information is received for the operating mode, the stitching mode and the output mode. In step 790, output data is generated for the display based on the selection information and the wide field of view model. The method is ended in step 795.

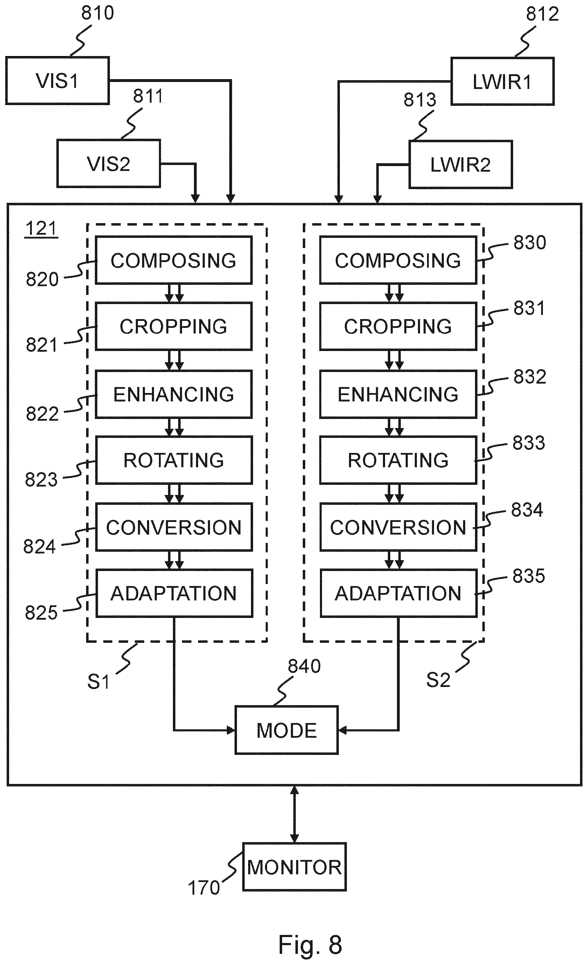

In an embodiment, different operating modes are provided. In the stitching mode, image data of different channels are configured to be combined using a stitching algorithm as disclosed in relation to Fig. 8 and associated description. In the first operating mode, image data of one channel is configured to be processed. That may be used, for example, when processing only one of the camera devices (e.g. VIS1 or VIS2) of certain channel or processing different image streams for different camera device. In the second operating mode, image data of both channels (VIS and LWIR) are configured to be combined.

In an embodiment, operating modes of the first, the second and the stitching mode may be configured to be used for different output modes that comprise at least one of the following modes: Full screen visual mode (FS-VIS), full screen thermal mode (FS-LWIR), split screen with visual image on top (SS-VIS), split screen with thermal image on top (SS-LWIR), Picture-in-Picture mode with thermal image as main image (PIP-VIS) and Picture-in-Picture mode with visual image as main image (PIP-LWIR).

In an embodiment, in full screen visual output mode (FS-VIS), CMOS or CCD camera image data is displayed in full screen resolution. In full screen thermal mode (FS-LWIR), LWIR camera image data is displayed at 1920 x 1080 (depending on the monitor) resolution. In split screen mode (Display: 1.920 x 1.080) with visual image on top (SS-VIS), the LWIR image data is displayed on top position at 1.920 x 540 resolution, and the VIS image data is displayed below at 1.920 x 540 resolution. In split screen mode with thermal image on top (SS-LWIR), the vertical positions of the image data are changed respectively.

A zoom mode is provided as option, both in full screen mode and in in split screen mode. Zoom mode is configured to be enabled also individually for each image, VIS and LWIR. A PAN mode is also enabled after zooming the image.

In an embodiment, an additional combined visual and thermal image mode (FUSION) may be used, for example, to replace the Picture-in-Picture modes. In FUSION mode, image data of two channels are combined to fused image data, wherein stitching mode is used for providing the image data of different channels for fusion.

Fig. 8 shows a flow diagram showing operations related to stitching in accordance with an example embodiment of the invention.

In the stitching mode, image data is stitched per channel, and realized as combination of dynamic and static stitching using the stitching algorithm.

In an embodiment, stitching process and algorithm is a combination of dynamic and static components and may comprise following phases carried at least partially by the wide field of view model (WFOV) 121, for example.
1) The single camera images are composed to a full image, a vertical image offset between the single camera images is corrected.
2) Cropping, the total image of the 2 single cameras images is cropped and scaled to the monitor resolution.
3) Contrast Enhancement is processed with both single images
4) Perspective of each single camera is corrected, there for a *rotation matrix for each single camera image is implemented.

In an embodiment, when in the stitching mode, image data of each channel 810-811 (VIS channel) and 812-813 (LWIR channel) are configured to be combined using a stitching algorithm S1, S2 of the wide field of view model (WFOV) 121. Not all elements and functionalities of the wide field of view model (WFOV) 121 or the stitching algorithms S1, S2 are shown but only some main elements to illustrate the stitching mode.

In visual (VIS) channel, first image data 810 and second image data 811 of the VIS channel are received from respective camera devices, for example. The image data 810-811 are provided in stitching mode to the wide field of view model (WFOV) 121 for processing by the stitching algorithm S1.

In composing step 820, first and second image data 810, 811 are composed, wherein vertical image offset between the first and second image data 810, 811 is corrected to provide composed image data. The composed image data comprises composed first and second image data with corrected vertical offset so that when arranging the composed first and second image data horizontally aligned, the combined image has no vertical offset.

In cropping step 821, the composed image data is cropped and scaled to correspond with the monitor/display 170 resolution to provide scaled image data. The scaled image data comprises scaled first and second image data with adjusted resolution based on resolution input from the monitor 170 or set by the user so that when arranging the scaled first and second image data horizontally aligned, the combined image matches the monitor resolution.

In enhancing step 822, the scaled image data is processed to enhance contrast of the image data to provide enhanced image data. The enhanced image data comprises enhanced first and second image data with enhanced contrast.

In rotating step 823, the enhanced image data is corrected for perspective to provide rotated image data. A rotation matrix may be used for correction, for example. The rotated image data comprises rotated first and second image data with adjusted rotation using rotation function so that when arranging the rotated first and second image data horizontally aligned, linear objects in the combined image are linear over the borderline of the rotated first and second image data. Rotation function may be applied for each image of the image data.

In conversion step 824, the rotated image data is conversed using Trapez conversion into rectangular image data. The rotated image data comprising the first and second rotated image may not be rectangular in shape and that is corrected for both first and second image to provide resulting rectangular image data. The rectangular image data comprises rectangular first and second image data so that when arranging the rectangular first and second image data horizontally aligned, the combined image is also rectangular and fitting to the monitor resolution.

In adaptation step 825, the rectangular image data is composed to provide adapted image data comprising a single image, wherein selected part of the rectangular image data in the transition area (in the borderline area where first and second image data from different cameras are combined) are extracted and average value of the image brightness is calculated for that area. Image gain adaptation may also be applied for harmonizing the adapted image data. The adapted image data comprises single image data and do not comprise anymore separate first and second data. The adapted image is provided to be displayed by the monitor or combined with other channels, for example.

In mode selection step 840, the adapted image data may be combined with other channel(s) (LWIR channel) before providing data to the monitor 170, or providing the adapted data without combination to the monitor 170.

In an embodiment, instead or in addition to providing output data to display/monitor 170, the output data may be used as input for controlling a sub-system of the vehicle 105 as shown in Figs. 1, 3-4, for example. Automatic or autonomous operations may thus be enabled.

In infrared (LWIR) channel, third image data 812 and fourth image data 813 of the LWIR channel are received from respective camera devices, for example. The third and fourth image data 812-813 are provided in stitching mode to the wide field of view model (WFOV) 121 for processing by the stitching algorithm S2. The stitching algorithms S1 and S2 may be a single algorithm or two separate algorithms.

In an embodiment, steps 830-835 may correspond to the steps 820-825 as disclosed above.

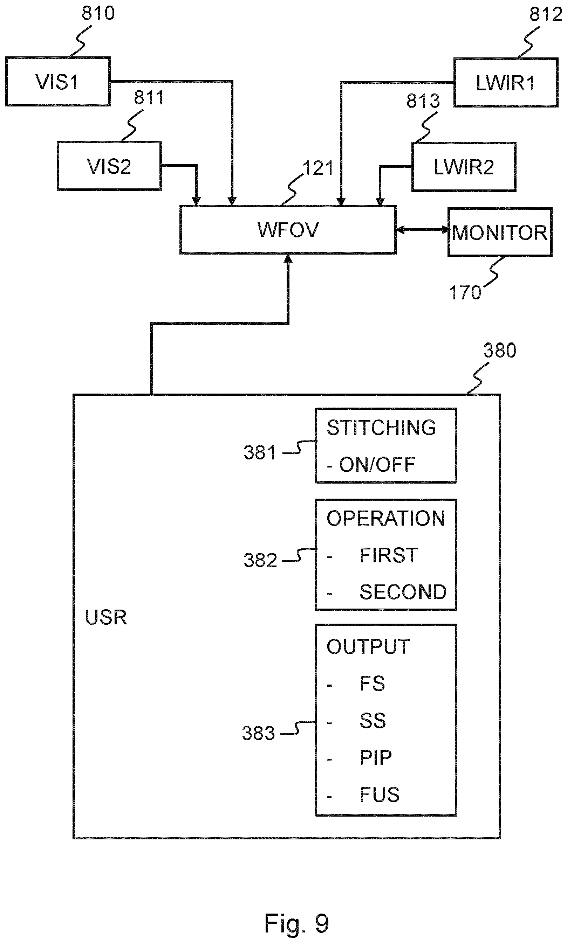

Fig. 9 shows a schematic picture of a wide field of view model (WFOV) 121 and related data according to an example embodiment.

As disclosed in Fig. 8, in visual (VIS) channel, first image data 810 and second image data 811 of the VIS channel are received from respective camera devices, for example. Correspondingly, in infrared (LWIR) channel, third image data 812 and fourth image data 813 of the LWIR channel are received from respective camera devices, for example.

In an embodiment, the wide field of view model (WFOV) 121 is configured to receive input from an operator (USR) 380 either on-board the vehicle or remote at other vehicle or remote control apparatus, for example. In certain pre-defined operating modes or tasks, it may be required that operator acknowledgement is received from the operator (USR) 380 for the determined task by the wide field of view model (WFOV) 121 before controlling an automation element of the vehicle based on the determined task in response to the received operator acknowledgement.

In an embodiment, the user input information 380 may comprise a plurality of inputs. Stitching mode input 381 is configured to set stitching mode active (on) or inactive (off). As default, the value is on. Operation mode input 382 is configured to set operation mode between first operation mode and second operation mode. In the first operation mode image data of one channel (VIS or LWIR) is configured to be processed, and in the second operating mode image data of both channels (VIS and LWIR) are configured to be processed by the model 121. Output mode input 383 is configured to set the mode how image data is provided via the display/monitor 170. The output mode input 383 may be configured to set at least some of the following modes: Full screen visual mode (FS-VIS), full screen thermal mode (FS-LWIR), split screen with visual image on top (SS-VIS), split screen with thermal image on top (SS-LWIR), Picture-in-Picture mode with thermal image as main image (PIP-VIS), Picture-in-Picture mode with visual image as main image (PIP-LWIR), and fusion mode (FUS) wherein full screen combined image using both channels and four camera data are utilized with stitching mode in. All the output modes can be provided in stitching mode but depending on the installation configuration, user may select also any of the output modes (except fusion mode) without stitching mode on, wherein the image data 810-811, or 812-813 are not stitched but provided to the monitor 170 as unstitched image data.

Various embodiments have been presented. It should be appreciated that in this document, words comprise, include and contain are each used as open-ended expressions with no intended exclusivity. If desired, the different functions discussed herein may be performed in a different order and/or concurrently with each other. Furthermore, if desired, one or more of the above-described functions may be optional or may be combined.

Without in any way limiting the scope, interpretation, or application of the claims appearing below, a technical effect of one or more of the example embodiments disclosed herein is improved method and apparatus for vision system of a vehicle. Another technical effect of one or more of the example embodiments disclosed herein is improved method and apparatus for vehicle vision mode control.

Another technical effect of one or more of the example embodiments disclosed herein is that it enables performing the vehicle related tasks automatically in the safest and most efficient way possible. Optionally, while the operator may have oversight, the wide field of view model based automation may be principally handled by software in autonomous mode.

Another technical effect of one or more of the example embodiments disclosed herein is that safety is improved since there is less likelihood of human error, and systems are efficiently utilized, and greater efficiency that allows reduced operating costs.

It is also noted herein that while the foregoing describes example embodiments of the invention, these descriptions should not be viewed in a limiting sense. Rather, there are several variations and modifications, which may be made without departing from the scope of the present invention as defined in the appended claims.

## Claims

1. A surveillance apparatus carried by a vehicle for generating surveillance image data, comprising:
a plurality of camera devices (151, 152, 153, 154) configured to provide image data on different channels, wherein each channel is associated with at least two camera devices (151, 152; 153, 154) with substantially same field-of-view (FOV) angles but different line-of-sight (LOS) angles;
a communication interface (250, 550, 650) for transceiving data;
at least one processor (210, 510, 610); and
at least one memory (220, 520, 620) including computer program code (230, 530, 630);
the at least one memory (220, 520, 620) and the computer program code (230, 530, 630) configured to, with the at least one processor (210, 510, 610), cause the apparatus to:
receive (710) first image data and second image data of a first channel, wherein the first channel is a longwave infrared (LWIR) channel;
receive (720) third image data and fourth image data of a second channel, wherein the second channel is a visible spectrum (VIS) channel;
generate (730) a wide field of view model based on the first, second, third and fourth image data;
determine (740) a stitching mode, wherein image data of at least one channel is configured to be combined using a stitching algorithm;
determine (750) a first operating mode, wherein image data of one channel is configured to be processed;
determine (760) a second operating mode, wherein image data of both channels are configured to be combined;
determine (770) output mode, wherein the output mode defines configuration for image data to be provided on the display (170);
receive (780) selection information for the operating mode, the stitching mode and the output mode; and
generate (790) output data for the display (170) based on the selection information and the wide field of view model,
**characterized in that** in the stitching mode, image data is stitched per channel, by combination of dynamic and static stitching.

2. The apparatus of claim 1, wherein static stitching components include at least following:
vertical adaption information;
perspective correction information; and
cutting information.

3. The apparatus of claim 1, wherein dynamic stitching components include at least following:
contrast adaptation information;
color adaptation information; and
blending of image transition information.

4. The apparatus of any claim 1 to 3, wherein in the stitching mode, image stitching of different channels is configured to be arranged simultaneously.

5. The apparatus of any claim 1 to 4, wherein the apparatus is further configured to determine a backup operating mode, wherein a multiplexer function is activated to provide a video signal bypass image data for the display (170) without processing the image data with the wide field of view model.

6. The apparatus of any claim 1 to 5, wherein the at least two camera devices (151, 152) associated to the first channel are arranged vertically alongside each other, and/or wherein the at least two camera devices (153, 154) associated to the second channel are arranged vertically alongside each other.

7. The apparatus of any claim 1 to 6, wherein the at least two camera devices associated to the first channel (151, 152) are arranged horizontally alongside the at least two camera devices (153, 154) associated to the second channel.

8. The apparatus of any claim 1 to 7, wherein the camera device (151, 152, 153, 154) comprises at least one of the following: LWIR sensor, SWIR sensor, CMOS sensor, image Intensified CMOS, and CCD sensor.

9. The apparatus of any claim 1 to 8, wherein in the second operating mode, combining the image data of both channels comprises at least one of stitching and fusing of the image data.

10. The apparatus of any claim 1 to 9, wherein in the second operating mode, combining the image data of both channels comprises a plurality of different fusion modes for the image data.

11. The apparatus of any claim 1 to 10, wherein the image data comprises video data and/or still image data.

12. The apparatus of any claim 1 to 11, wherein the output mode comprises at least one of the following: full screen (FS) mode, split screen (SS) mode, picture-in-picture (PIP) mode and fusion mode (FUS).

13. Computer-implemented method for generating surveillance image data by at least one processor of an apparatus (120) carried by a vehicle, wherein a plurality of camera devices (151, 152, 153, 154) carried by the vehicle are configured to provide image data or different channels, and wherein each channel is associated with at least two camera devices (151, 152; 153, 154) with substantially same field-of-view (FOV) angles but different line-of-sight (LOS) angles, the method comprising:
receiving (710) first image data and second image data of a first channel, wherein the first channel is a longwave infrared (LWIR) channel;
receiving (720) third image data and fourth image data of a second channel, wherein the second channel is a visible spectrum (VIS) channel;
generating (730) a wide field of view model based on the first, second, third and fourth image data;
determining (740) a stitching mode, wherein image data of at least one channel is configured to be combined using a stitching algorithm;
determining (750) a first operating mode, wherein image data of one channel is configured to be processed;
determining (760) a second operating mode, wherein image data of both channels are configured to be combined;
determining (770) output mode, wherein the output mode defines configuration for image data to be provided on the display (170);
receiving (780) selection information for the operating mode, the stitching mode and the output mode; and
generating (790) output data for a display (170) based on the selection information and the wide field of view model,
**characterized in that** in the stitching mode, image data is stitched per channel, by combination of dynamic and static stitching.

14. A computer program embodied on a computer readable medium comprising computer executable program code (230), which code, when executed by at least one processor (210, 510, 610) of an apparatus (120) carried by a vehicle, causes the apparatus to:
receive (710) first image data and second image data of a first channel, wherein the first channel is a longwave infrared (LWIR) channel;
receive (720) third image data and fourth image data of a second channel, wherein the second channel is a visible spectrum (VIS) channel, wherein a plurality of camera devices (151, 152, 153, 154) carried by the vehicle are configured to provide image data or different channels, and wherein each channel is associated with at least two camera devices (151, 152; 153, 154) with substantially same field-of-view (FOV) angles but different line-of-sight (LOS) angles;
generate (730) a wide field of view model based on the first, second, third and fourth image data;
determine (740) a stitching mode, wherein image data of at least one channel is configured to be combined using a stitching algorithm;
determine (750) a first operating mode, wherein image data of one channel is configured to be processed;
determine (760) a second operating mode, wherein image data of both channels are configured to be combined;
determine (770) output mode, wherein the output mode defines configuration for image data to be provided on the display (170);
receive (780) selection information for the operating mode, the stitching mode and the output mode; and
generate (790) output data for a display (170) based on the selection information and the wide field of view model,
**characterized in that** in the stitching mode, image data is stitched per channel, by combination of dynamic and static stitching.

## Patentansprüche

1. Fahrzeuggestützte Überwachungseinrichtung zur Erzeugung von Überwachungsbilddaten, umfassend:
eine Mehrzahl von Kameravorrichtungen (151, 152, 153, 154), die dazu ausgelegt sind, Bilddaten auf unterschiedlichen Kanälen bereitzustellen, wobei jeder Kanal mit mindestens zwei Kameravorrichtungen (151, 152; 153, 154) mit im Wesentlichen gleichen Gesichtsfeld-(FOV)-Winkeln, aber unterschiedlichen Sichtlinien-(LOS)-Winkeln verknüpft ist;
eine Kommunikationsschnittstelle (250, 550, 650) zum Senden und Empfangen von Daten;
mindestens einen Prozessor (210, 510, 610); und
mindestens einen Speicher (220, 520, 620), der einen Computerprogrammcode (230, 530, 630) umfasst;
wobei der mindestens eine Speicher (220, 520, 620) und der Computerprogrammcode (230, 530, 630) dazu ausgelegt sind, mit dem mindestens einen Prozessor (210, 510, 610) die Vorrichtung zu Folgendem zu veranlassen:
Empfangen (710) erster Bilddaten und zweiter Bilddaten eines ersten Kanals, wobei der erste Kanal ein Kanal für langwelliges Infrarot (LWIR) ist;
Empfangen (720) dritter Bilddaten und vierter Bilddaten eines zweiten Kanals, wobei der zweite Kanal ein Kanal für das sichtbare Spektrum (VIS) ist;
Erzeugen (730) eines breiten Gesichtsfeldmodells basierend auf den ersten, zweiten, dritten und vierten Bilddaten;
Bestimmen (740) eines Stitching-Modus, wobei Bilddaten mindestens eines Kanals dazu konfiguriert sind, unter Verwendung eines Stitching-Algorithmus kombiniert zu werden;
Bestimmen (750) eines ersten Betriebsmodus, wobei Bilddaten eines Kanals dazu konfiguriert sind, verarbeitet zu werden;
Bestimmen (760) eines zweiten Betriebsmodus, wobei Bilddaten beider Kanäle dazu konfiguriert sind, kombiniert zu werden;
Bestimmen (770) eines Ausgabemodus, wobei der Ausgabemodus eine Konfiguration für Bilddaten definiert, die auf der Anzeige (170) bereitzustellen sind;
Empfangen (780) von Auswahlinformationen für den Betriebsmodus, den Stitching-Modus und den Ausgabemodus; und
Erzeugen (790) von Ausgabedaten für die Anzeige (170) basierend auf den Auswahlinformationen und dem breiten Gesichtsfeldmodell,
**gekennzeichnet dadurch, dass** im Stitching-Modus Bilddaten pro Kanal durch eine Kombination aus dynamischem und statischem Stitching zusammengefügt werden.

2. Einrichtung nach Anspruch 1, wobei statische Stitching-Komponenten mindestens Folgendes umfassen:
vertikale Anpassungsinformationen;
perspektivische Korrekturinformationen; und
Schnittinformationen.

3. Einrichtung nach Anspruch 1, wobei dynamische Stitching-Komponenten mindestens Folgendes umfassen:
Kontrastanpassungsinformationen;
Farbanpassungsinformationen; und
Blending-Bildübergangsinformationen.

4. Einrichtung nach einem der Ansprüche 1 bis 3, wobei im Stitching-Modus das Stitching von Bildern unterschiedlicher Kanäle dazu ausgelegt ist, gleichzeitig veranlasst zu werden.

5. Einrichtung nach einem der Ansprüche 1 bis 4, wobei die Einrichtung ferner dazu ausgelegt ist, einen Backup-Betriebsmodus zu bestimmen, wobei eine Multiplexer-Funktion aktiviert wird, um Videosignal-Bypass-Bilddaten für die Anzeige (170) bereitzustellen, ohne die Bilddaten mit dem breiten Gesichtsfeldmodell zu bearbeiten.

6. Einrichtung nach einem der Ansprüche 1 bis 5, wobei die dem ersten Kanal zugeordneten mindestens zwei Kameravorrichtungen (151, 152) vertikal nebeneinander angeordnet sind, und/oder wobei die dem zweiten Kanal zugeordneten mindestens zwei Kameravorrichtungen (153, 154) vertikal nebeneinander angeordnet sind.

7. Einrichtung nach einem der Ansprüche 1 bis 6, wobei die dem ersten Kanal zugeordneten mindestens zwei Kameravorrichtungen (151, 152) horizontal neben den dem zweiten Kanal zugeordneten mindestens zwei Kameravorrichtungen (153, 154) angeordnet sind.

8. Einrichtung nach einem der Ansprüche 1 bis 7, wobei die Kameravorrichtung (151, 152, 153, 154) mindestens eines von Folgendem umfasst: LWIR-Sensor, SWIR-Sensor, CMOS-Sensor, bildintensivierter CMOS und CCD-Sensor.

9. Einrichtung nach einem der Ansprüche 1 bis 8, wobei im zweiten Betriebsmodus das Kombinieren der Bilddaten der beiden Kanäle das Stitching und/oder Verschmelzen der Bilddaten umfasst.

10. Einrichtung nach einem der Ansprüche 1 bis 9, wobei im zweiten Betriebsmodus das Kombinieren der Bilddaten der beiden Kanäle mehrere unterschiedliche Verschmelzungsmodi für die Bilddaten umfasst.

11. Einrichtung nach einem der Ansprüche 1 bis 10, wobei die Bilddaten Videodaten und/oder Standbilddaten umfassen.

12. Einrichtung nach einem der Ansprüche 1 bis 11, wobei der Ausgabemodus mindestens eines von Folgendem umfasst: Vollbild-(FS)-Modus, Geteiltbild-(SS)-Modus, Bild-in-Bild-(PIP)-Modus und Fusionsmodus (FUS).

13. Computer-implementiertes Verfahren zur Erzeugung von Überwachungsbilddaten durch mindestens einen Prozessor einer fahrzeuggestützten Einrichtung (120), wobei mehrere fahrzeuggestützte Kameravorrichtungen (151, 152, 153, 154) dazu ausgelegt sind, Bilddaten auf unterschiedlichen Kanälen bereitzustellen, und wobei jeder Kanal mit mindestens zwei Kameravorrichtungen (151, 152; 153, 154) mit im Wesentlichen gleichen Gesichtsfeld-(FOV)-Winkeln, aber unterschiedlichen Sichtlinien-(LOS)-Winkeln verknüpft ist, wobei das Verfahren umfasst:
Empfangen (710) erster Bilddaten und zweiter Bilddaten eines ersten Kanals, wobei der erste Kanal ein Kanal für langwelliges Infrarot (LWIR) ist;
Empfangen (720) dritter Bilddaten und vierter Bilddaten eines zweiten Kanals, wobei der zweite Kanal ein Kanal für das sichtbare Spektrum (VIS) ist;
Erzeugen (730) eines breiten Gesichtsfeldmodells basierend auf den ersten, zweiten, dritten und vierten Bilddaten;
Bestimmen (740) eines Stitching-Modus, wobei Bilddaten mindestens eines Kanals dazu konfiguriert sind, unter Verwendung eines Stitching-Algorithmus kombiniert zu werden;
Bestimmen (750) eines ersten Betriebsmodus, wobei Bilddaten eines Kanals dazu konfiguriert sind, verarbeitet zu werden;
Bestimmen (760) eines zweiten Betriebsmodus, wobei Bilddaten beider Kanäle dazu konfiguriert sind, kombiniert zu werden;
Bestimmen (770) eines Ausgabemodus, wobei der Ausgabemodus eine Konfiguration für Bilddaten definiert, die auf der Anzeige (170) bereitzustellen sind;
Empfangen (780) von Auswahlinformationen für den Betriebsmodus, den Stitching-Modus und den Ausgabemodus; und
Erzeugen (790) von Ausgabedaten für eine Anzeige (170) basierend auf den Auswahlinformationen und dem breiten Gesichtsfeldmodell,
**gekennzeichnet dadurch, dass** im Stitching-Modus Bilddaten pro Kanal durch eine Kombination aus dynamischem und statischem Stitching zusammengefügt werden.

14. Auf einem computerlesbaren Medium verkörpertes Computerprogramm, das einen computerausführbaren Programmcode (230) umfasst, wobei der Code, wenn durch mindestens einen Prozessor (210, 510, 610) einer fahrzeuggestützten Einrichtung (120) ausgeführt, die Einrichtung veranlasst zum:
Empfangen (710) erster Bilddaten und zweiter Bilddaten eines ersten Kanals, wobei der erste Kanal ein Kanal für langwelliges Infrarot (LWIR) ist;
Empfangen (720) dritter Bilddaten und vierter Bilddaten eines zweiten Kanals, wobei der zweite Kanal ein Kanal für das sichtbare Spektrum (VIS) ist, wobei mehrere fahrzeuggestützte Kameravorrichtungen (151, 152, 153, 154) dazu ausgelegt sind, Bilddaten auf unterschiedlichen Kanälen bereitzustellen, und wobei jeder Kanal mit mindestens zwei Kameravorrichtungen (151, 152; 153, 154) mit im Wesentlichen gleichen Gesichtsfeld-(FOV)-Winkeln, aber unterschiedlichen Sichtlinien-(LOS)-Winkeln verknüpft ist;
Erzeugen (730) eines breiten Gesichtsfeldmodells basierend auf den ersten, zweiten, dritten und vierten Bilddaten;
Bestimmen (740) eines Stitching-Modus, wobei Bilddaten mindestens eines Kanals dazu konfiguriert sind, unter Verwendung eines Stitching-Algorithmus kombiniert zu werden;
Bestimmen (750) eines ersten Betriebsmodus, wobei Bilddaten eines Kanals dazu konfiguriert sind, verarbeitet zu werden;
Bestimmen (760) eines zweiten Betriebsmodus, wobei Bilddaten beider Kanäle dazu konfiguriert sind, kombiniert zu werden;
Bestimmen (770) eines Ausgabemodus, wobei der Ausgabemodus eine Konfiguration für Bilddaten definiert, die auf der Anzeige (170) bereitzustellen sind;
Empfangen (780) von Auswahlinformationen für den Betriebsmodus, den Stitching-Modus und den Ausgabemodus; und
Erzeugen (790) von Ausgabedaten für eine Anzeige (170) basierend auf den Auswahlinformationen und dem breiten Gesichtsfeldmodell,
**gekennzeichnet dadurch, dass** im Stitching-Modus Bilddaten pro Kanal durch eine Kombination aus dynamischem und statischem Stitching zusammengefügt werden.

## Revendications

1. Appareil de surveillance embarqué dans un véhicule pour générer des données d'image de surveillance, comprenant :
une pluralité de dispositifs de caméra (151, 152, 153, 154) configurés pour fournir des données d'image sur des canaux différents, chaque canal étant associé à au moins deux dispositifs de caméra (151, 152; 153, 154) avec des angles de champ de vision (FOV) essentiellement identiques mais des angles de ligne de visée (LOS) différents;
une interface de communication (250, 550, 650) pour l'émission-réception de données;
au moins un processeur (210, 510, 610); et
au moins une mémoire (220, 520, 620) incluant un code de programme informatique (230, 530, 630);
ladite au moins une mémoire (220, 520, 620) et ledit code de programme informatique (230, 530, 630) étant configurés pour amener l'appareil, avec ledit au moins un processeur (210, 510, 610), à :
recevoir (710) de premières données d'image et de deuxièmes données d'image d'un premier canal, ledit premier canal étant un canal pour l'infrarouge à ondes longues (LWIR);
recevoir (720) de troisièmes données d'image et de quatrièmes données d'image d'un deuxième canal, ledit deuxième canal étant un canal pour le spectre visible (VIS);
générer (730) un modèle de grand champ de vision sur la base des premières, deuxièmes, troisièmes et quatrièmes données d'image;
déterminer (740) un mode d'assemblage, dans lequel des données d'image d'au moins un canal sont configurées pour être combinées selon un algorithme d'assemblage;
déterminer (750) un premier mode de fonctionnement, dans lequel des données d'image d'un canal sont configurées pour être traitées;
déterminer (760) un deuxième mode de fonctionnement, dans lequel des données d'image des deux canaux sont configurées pour être combinées;
déterminer (770) un mode de sortie, ledit mode de sortie définissant une configuration pour les données d'image à prévoir sur l'affichage (170);
recevoir (780) des informations de sélection pour le mode de fonctionnement, le mode d'assemblage et le mode de sortie; et
générer (790) des données de sortie pour un affichage (170) sur la base des informations de sélection et du modèle de grand champ de vision,
**caractérisé en ce que,** dans le mode d'assemblage, des données d'image sont assemblées par canal par une combinaison d'assemblage dynamique et statique.

2. Appareil selon la revendication 1, dans lequel les composantes d'assemblage statique comprennent au moins ce qui suit :
des informations d'adaptation verticale;
des informations de correction perspective; et
des informations de coupe.

3. Appareil selon la revendication 1, dans lequel les composantes d'assemblage dynamique comprennent au moins ce qui suit :
des informations d'adaptation de contraste;
des informations d'adaptation de couleur; et
mélange d'informations de transition d'images.

4. Appareil selon l'une des revendications 1 à 3, dans lequel, dans le mode d'assemblage, l'assemblage d'images de canaux différents est configurés pour être arrangé simultanément.

5. Appareil selon l'une des revendications 1 à 4, dans lequel l'appareil est également configuré pour déterminer un mode de fonctionnement de sauvegarde, dans lequel une fonction de multiplexage est activée pour fournir des données d'image à contournement du signal vidéo pour l'affichage (170) sans traiter les données d'image avec le modèle de grand champ de vision.

6. Appareil selon l'une des revendications 1 à 5, dans lequel lesdits au moins deux dispositifs de caméra (151, 152) associés au premier canal sont disposés verticalement les uns à côté des autres, et/ou dans lequel lesdits au moins deux dispositifs de caméra (153, 154) associés au deuxième canal sont disposés verticalement les uns à côté des autres.

7. Appareil selon l'une des revendications 1 à 6, dans lequel lesdits au moins deux dispositifs de caméra (151, 152) associés au premier canal sont disposés horizontalement à côté desdits au moins deux dispositifs de caméra (153, 154) associés au deuxième canal.

8. Appareil selon l'une des revendications 1 à 7, dans lequel le dispositif de caméra (151, 152, 153, 154) comprend au moins l'un parmi : capteur LWIR, capteur SWIR, capteur CMOS, CMOS à intensification d'image et capteur CCD.

9. Appareil selon l'une des revendications 1 à 8, dans lequel, dans le deuxième mode de fonctionnement, la combinaison des données d'image des deux canaux comprend au moins l'un parmi l'assemblage et la fusion des données d'image.

10. Appareil selon l'une des revendications 1 à 9, dans lequel, dans le deuxième mode de fonctionnement, la combinaison des données d'image des deux canaux comprend une pluralité de modes de fusion différents pour les données d'image.

11. Appareil selon l'une des revendications 1 à 10, dans lequel les données d'image comprennent des données de vidéo et/ou des données d'image fixe.

12. Appareil selon l'une des revendications 1 à 11, dans lequel le mode de sortie comprend au moins l'un parmi : le mode de plein écran (FS), le mode d'écran partagé (SS), le mode d'incrustation d'image (PIP) et le mode de fusion (FUS).

13. Procédé mis en oeuvre par ordinateur pour générer des données d'image de surveillance par au moins un processeur d'un appareil (120) embarqué dans un véhicule, dans lequel une pluralité de dispositifs de caméra (151, 152, 153, 154) embarqués dans le véhicule sont configurés pour fournir des données d'image sur des canaux différents, et dans lequel chaque canal est associé à au moins deux dispositifs de caméra (151, 152; 153, 154) avec des angles de champ de vision (FOV) essentiellement identiques mais des angles de ligne de visée (LOS) différents, ledit procédé comprenant les étapes consistant à :
recevoir (710) de premières données d'image et de deuxièmes données d'image d'un premier canal, ledit premier canal étant un canal pour l'infrarouge à ondes longues (LWIR);
recevoir (720) de troisièmes données d'image et de quatrièmes données d'image d'un deuxième canal, ledit deuxième canal étant un canal pour le spectre visible (VIS);
générer (730) un modèle de grand champ de vision sur la base des premières, deuxièmes, troisièmes et quatrièmes données d'image;
déterminer (740) un mode d'assemblage, dans lequel des données d'image d'au moins un canal sont configurées pour être combinées selon un algorithme d'assemblage;
déterminer (750) un premier mode de fonctionnement, dans lequel des données d'image d'un canal sont configurées pour être traitées;
déterminer (760) un deuxième mode de fonctionnement, dans lequel des données d'image des deux canaux sont configurées pour être combinées;
déterminer (770) un mode de sortie, ledit mode de sortie définissant une configuration pour les données d'image à prévoir sur l'affichage (170);
recevoir (780) des informations de sélection pour le mode de fonctionnement, le mode d'assemblage et le mode de sortie; et
générer (790) des données de sortie pour un affichage (170) sur la base des informations de sélection et du modèle de grand champ de vision,
**caractérisé en ce que,** dans le mode d'assemblage, des données d'image sont assemblées par canal par une combinaison d'assemblage dynamique et statique.

14. Programme informatique incorporé sur un support lisible par un ordinateur comprenant un code de programme (230) exécutable par un ordinateur, ledit code, lorsqu'il est exécuté par au moins un processeur (210, 510, 610) d'un appareil (120) embarqué dans un véhicule, amenant l'appareil à :
recevoir (710) de premières données d'image et de deuxièmes données d'image d'un premier canal, ledit premier canal étant un canal pour l'infrarouge à ondes longues (LWIR);
recevoir (720) de troisièmes données d'image et de quatrièmes données d'image d'un deuxième canal, ledit deuxième canal étant un canal pour le spectre visible (VIS), dans lequel une pluralité de dispositifs de caméra (151, 152, 153, 154) embarqués dans le véhicule sont configurés pour fournir des données d'image sur des canaux différents, et dans lequel chaque canal est associé à au moins deux dispositifs de caméra (151, 152; 153, 154) avec des angles de champ de vision (FOV) essentiellement identiques mais des angles de ligne de visée (LOS) différents;
générer (730) un modèle de grand champ de vision sur la base des premières, deuxièmes, troisièmes et quatrièmes données d'image;
déterminer (740) un mode d'assemblage, dans lequel des données d'image d'au moins un canal sont configurées pour être combinées selon un algorithme d'assemblage;
déterminer (750) un premier mode de fonctionnement, dans lequel des données d'image d'un canal sont configurées pour être traitées;
déterminer (760) un deuxième mode de fonctionnement, dans lequel des données d'image des deux canaux sont configurées pour être combinées;
déterminer (770) un mode de sortie, ledit mode de sortie définissant une configuration pour les données d'image à prévoir sur l'affichage (170);
recevoir (780) des informations de sélection pour le mode de fonctionnement, le mode d'assemblage et le mode de sortie; et
générer (790) des données de sortie pour un affichage (170) sur la base des informations de sélection et du modèle de grand champ de vision,
**caractérisé en ce que,** dans le mode d'assemblage, des données d'image sont assemblées par canal par une combinaison d'assemblage dynamique et statique.
